# EUROPEAN PATENT APPLICATION

(11) **EP 2 533 386 A1**
(43) Date of publication of application: **12.12.2012**
(21) Application number: 12170073.6
(22) Date of filing: 30.05.2012
(51) Int. Cl.: H02G 5/06, H02G 9/08, H02B 13/025, H02B 3/00

(54) **Systems and methods for routing, monitoring repair, and maintenance of underground gas insulated transmission lines**

(30) Priority: 09.06.2011 US 201113157213
(71) Applicant: General Electric Company, Schenectady, NY 12345 (US)
(72) Inventor: Andoji, Kavitha, 500081 Madhapur (IN); Prabu, Kandasamy Kalaimani Dinesh, 500081 Madpahur (IN); Variganti, Sabitha, 500081 Madhapur (IN)
(74) Representative: Cleary, Fidelma

(57) **Abstract**

An underground gas insulated transmission line (UGIL) system (140) is provided that includes a first compartment (58) having a gas insulated transmission line (10), a first camera slider (50) disposed on a wall (52) of the first compartment (58), a camera (148) moveably coupled to the camera slider (50), a global positioning system (GPS) receiver (144) disposed in the first compartment (58), and a gas sensor (146) disposed in the first compartment (58).

## Description

### BACKGROUND OF THE INVENTION

The subject matter disclosed herein relates to the transmission of electricity and, more specifically, to underground lines for transmission.

Modem societies rely heavily on electricity generated at power plants and transmitted to remote locations, such as residential and commercial sites. In some cases, the electricity may be transmitted using underground insulated lines. The lines may be routed and connected in tunnels underneath the surface. The design and routing of the lines may present challenges based on the different terrains and complexity of the technology used to insulate the lines.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a system including a first compartment having a gas insulated transmission line, a first camera slider disposed on a wall of the first compartment, a camera moveably coupled to the camera slider, a global positioning system (GPS) receiver disposed in the first compartment, and a gas sensor disposed in the first compartment.

In a second aspect, the invention resides in a method including receiving, at a computer, data from an arc detector, gas sensor, pressure meter, temperature sensor, gas density meter, or a combination thereof disposed in a compartment comprising a underground gas insulated transmission line, wherein the computer is coupled to the arc detector, gas sensor, pressure meter, temperature sensor, gas density meter, or a combination thereof via a network and receiving location coordinates at the computer from a GPS receiver coupled to the network. The method further includes storing the data in a data model stored in a database accessible by the computer, storing the location coordinates in the database, associating the location coordinates with the data, and moving a camera disposed in the compartment to the location coordinates.

In a third aspect, the invention resides in a non-transitory tangible computer readable medium including code stored thereon, the code having instructions for creating a data model for a gas insulated transmission line system, creating a plurality of objects of the data model, wherein the plurality of objects comprises a tunnel object, a compartment object, a gas pipeline object, and a transmission line object, and storing data for each of the respective plurality of objects.

### BRIEF DESCRIPTION OF THE DRAWINGS

Embodiments of the present invention will now be described, by way of example only, with reference to the accompanying drawings in which:
FIG. 1 is a cross-section of an embodiment of an underground gas insulated transmission line;
FIG. 2 is a block diagram of an embodiment of a power transmission system;
FIG. 3 is a perspective schematic view of an embodiment of an underground gas insulated transmission line tunnel;
FIG. 4 is an unfolded view of the underground gas insulated transmission line tunnel of FIG. 3;
FIG. 5 is a top schematic view of an embodiment of compartments of an underground gas insulated transmission line system;
FIG. 6 is a block diagram of an embodiment of a geographic information systems data model for an underground gas insulated transmission line system;
FIGS. 7-13 depict embodiments of objects and properties of the geographic information systems data model of FIG. 6;
FIG. 14 is a screenshot of an embodiment of a user interface application for a geographic information systems data model of an underground gas insulated transmission line system;
FIG. 15 is a schematic view of an embodiment of an arc locator monitoring system for an underground gas insulated transmission line system;
FIG. 16 is a schematic view of an embodiment of a gas leak detection system for an underground gas insulated transmission line system;
FIG. 17 is a block diagram of an embodiment of a process for monitoring an underground gas insulated transmission line system;
FIG. 18 is a map view of an embodiment of a user interface application for a geographic information systems data model of an underground gas insulated transmission line system;
FIG. 19 is a block diagram of an embodiment of a process for determining repairs of an underground gas insulated transmission line system; and
FIG. 20 is a block diagram for determining maintenance of an underground gas insulated transmission line system.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present invention include systems and techniques for routing, monitoring, repairing, and maintaining underground gas insulated transmission lines. In one embodiment, a geographic information systems data model is provided that enables routing of underground gas insulated transmission lines in a tunnel. To facilitate monitoring, the tunnel may include camera sliders for moveable cameras and a global positioning system (GPS) receiver disposed in the tunnel. An arc detector locator system and a gas leak detection system are also provided. Upon detection of an occurrence, such as an arc or a gas leak, the occurrence and corresponding location coordinates may be recorded in the geographic information systems data model as an event. If the occurrence is of a certain type, the cameras may be moved to the location coordinates to record the event. Additionally, the geographic information systems data model may provide data for use in a map view that displays the events and other information on a map of the underground gas insulated transmission lines. Additionally, the geographic information systems data model may used to retrieve repair information, such as event and event history data. Finally, the geographic information systems data model may also provide data to aid in determining maintenance for the underground gas insulated transmission lines.

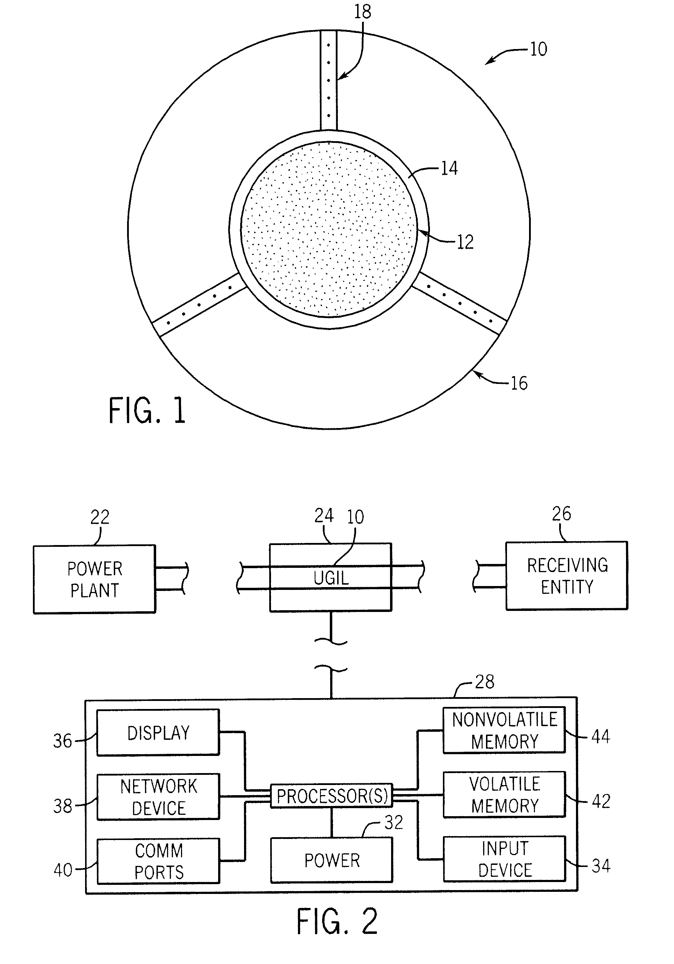

FIG. 1 depicts an underground gas insulated transmission line (UGIL) 10 in accordance with an embodiment of the present invention. The UGIL 10 may include a conductor (i.e., transmission line) 12 for transmission of electricity, a gas insulator 14, and an enclosure 16. The gas insulator 14 may be contained between the conductor 12 and the interior wall of the enclosure 16 in an annular cavity. In some embodiments, the UGIL 10 may include support insulators 18 to insulate the conductor 12 from structural supports attached to the UGIL 10. For example, if the UGIL 10 is buried in a tunnel, the support insulators 18 may be used to insulate the UGIL 10 from structural supports. In another example, if the UGIL 10 is buried in the soil, the support insulators 18 may not be used. In some embodiments, the gas insulator 14 may be sulfur hexafluoride (SF₆) gas, a nitrogen-sulfur hexafluoride (N₂-SF₆) mixture, or any suitable insulating gas. The gas insulator 14 and enclosure 16 seals and insulates the conductor 12 from the environment.

FIG. 2 depicts a power transmission system 20 that may utilize the underground gas insulated transmission lines 10 in accordance with an embodiment of the present invention. The power transmission system 10 may generate electricity at a power plant 22. The power plant 22 may include gas turbines, steam turbines, wind turbines, fossil fuel (e.g., coal, natural gas, petroleum) power stations, nuclear power stations, solar power stations, or any combination thereof. The underground gas insulated transmission line 10 may be operatively coupled to the power plant 22 and may be installed under a surface 24 of the earth. It should be appreciated that the underground gas insulated transmission line 10 may be coupled to the power plant 22 by additional power lines, such as other underground gas insulated transmission line 10 or conventional aboveground transmission lines.

Electricity from the power plant 22 may be transmitted to a receiving entity 26, such a commercial or residential user. It should be appreciated that the configuration of the underground gas insulated transmission line 10 may include any configuration suitable for the transmission for electricity, such as using three underground gas insulated transmission lines for 3-phase power conduction.

As described in further detail below, the power transmission system 20 may include a computer 28 for controlling and monitoring the system 20. For example, as explained below, the computer 28 may be coupled to portions of the underground gas insulating line 10 for monitoring of various sensors coupled to the underground gas insulated transmission line 10. The computer 28 may include one or more processors 30 that control the processing of system functions and requests and that execute the control and monitoring functions. The computer 28 may include a number of components that include, for example, a power supply 32, an input device 34, a display 36, network device 38, communication ports 40, volatile memory 42, and a non-volatile memory 44.

The power supply 32 of the computer 28 may include an AC adapter, so the computer 28 may be connected to an AC power system, such as through a wall outlet. The power supply 32 may also include a DC adapter, permanent batteries, replaceable batteries, and/or rechargeable batteries. The input device 34 may be coupled to the processor 30 and may include buttons, switches, a keyboard, a light pen, a mouse, and/or a voice recognition system, for instance. The display 36 may also be coupled to the processor 30. The display 36 may include an LCD display, a CRT, LEDs, and/or an audio display, for example. Furthermore, the computer 28 may include the network device 38 for communicating over a network, such as a wired or wireless Ethernet network. One or more communication ports 40 may also be coupled to the processor 30. The communication ports 40 may be adapted to be coupled to one or more peripheral devices such as a modem, a printer, a computer, or to a network, such as a local area network, remote area network, intranet, or the Internet, for instance.

The processor 30 generally controls the computer 28 by implementing software programs stored in the volatile memory 42 and non-volatile memory 44. These memories 42 and 44 are operably coupled to the processor 30 to store and facilitate execution of various programs. For instance, the processor 30 may be coupled to the volatile memory 46 which may include Dynamic Random Access Memory (DRAM) and/or Static Random Access Memory (SRAM). As mentioned above, the processor 30 may also be coupled to the non-volatile memory 44. The non-volatile memory 44 may include a read-only memory (ROM), such as an EPROM, and/or flash memory to be used in conjunction with the volatile memory 42. Additionally, the non-volatile memory 44 may include magnetic storage such as tape drives, hard disk drives, and the like.

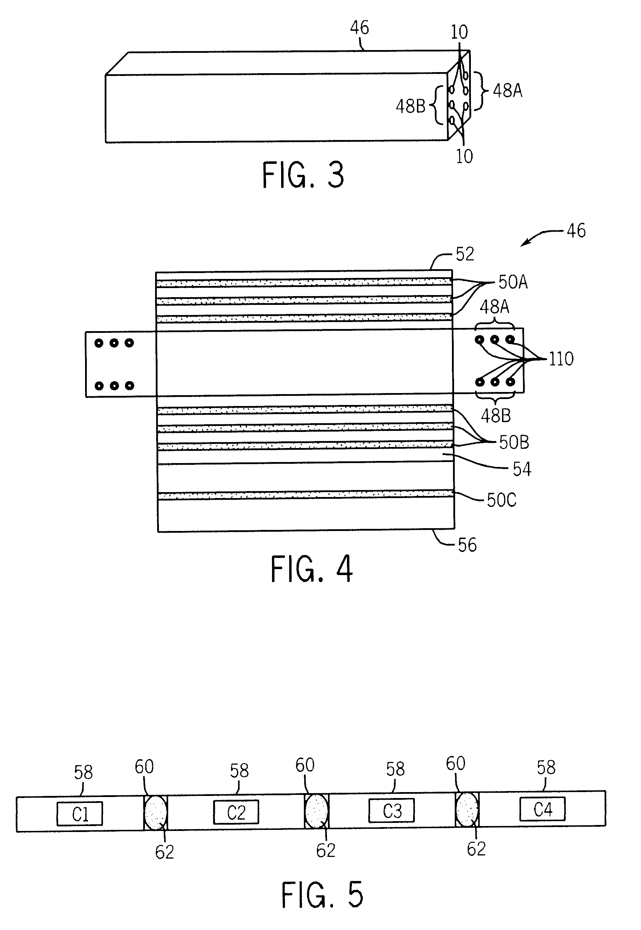

As mentioned above, embodiments of the present invention may include the systems having gas insulated transmission lines. In accordance with these embodiments, FIG. 3 depicts a perspective schematic view of underground gas insulated transmission lines 10 in a tunnel 46 arranged in a double-circuit transmission line having circuits 48. Each circuit 48A and 48B may include three underground gas insulated transmission lines 10 for the transmission of 3-phase power, thus two circuits 48A and 48B are carried inside the tunnel 46. In other embodiments, the underground gas insulated transmission lines 10 may be buried directly in the soil.

FIG. 4 is an unfolded view of the tunnel 46 in accordance with an embodiment of the present invention. In some embodiments, the tunnel 46 may be formed from concrete or other suitable material. The tunnel 46 may include camera sliders 50 mounted in the tunnel 46. As described below, these camera sliders 50 may provide for movement of cameras along the tunnel 46 for monitoring of the underground gas insulated transmission lines 10. In one embodiment, three camera sliders 50A may be disposed on a first sidewall 52 of the tunnel 46. Each of the camera sliders 50A may provide cameras for monitoring of each of the three underground gas insulated transmission lines 10 of the circuit 48A. Similarly, three camera sliders 50B may be disposed on a second sidewall 54 of the tunnel 46. Each of the camera sliders 50B may provide cameras for monitoring of each of the three underground gas insulated transmission lines 10 of the circuit 48B. Additionally, one or more camera sliders 50C may be disposed on the top 56 of the tunnel 46 to provide additional monitoring of the underground gas insulated transmission lines 10.

In some embodiments, design and routing of the underground gas insulated transmission lines 10 may include division into individual sections (referred to as "compartments.") FIG. 5 depicts a top schematic view of such an arrangement in accordance with an embodiment of the present invention. As shown in FIG. 5, the underground gas insulated transmission lines 10 may be arranged in compartments 58. Each compartment 58 may be joined to an adjacent compartment by a disconnector unit 60 and compensator unit 62. The disconnector unit 60 is used to separator the UGIL compartments 58 and may be used to perform sectional high voltage commissioning testing. Further, the disconnector unit 60 may allow disconnection of compartments 58 during maintenance. In some embodiments, the disconnector unit 60 may be placed at a distances of about 1.2 km to 1.8 km, such as distances of 1.2 km, 1.3 km, 1.4 km, 1.5 km, 1.6 km, 1.7 km, 1.8 km. In other embodiments, the disconnnector unit 60 may be placed at distances less than 1.2 km or greater than 1.8 km.

The compensator unit 64 may compensate for thermal expansion of the UGILs 10 during operation. For example, in tunnel or underground shaft arrangements, the UGILs 10 may not be fixed and may thermally expand as they increase temperature during operation. This thermal expansion may be compensated for by the compensation unit 64. In some embodiments, the compensator unit 64 may include a sliding contact system having a male sliding contact and a female sliding contact in contact with an inner conductor in an enclosure. The conductor may be insulated from the enclosure via a support insulator and other insulators, such as a conical insulator. The thermal expansion may be compensated for by the sliding engagement of the male and female sliding contacts. The compensation unit 64 may be include copper alloys, aluminum alloys, or other suitable materials.

In other embodiments in which the UGILs 10 are buried in the ground, such as in soil, the compensation unit 64 may not be used, because of the weight of the soil and the friction of the surface of the UGIL enclosure may compensate for the thermal expansion. In some embodiments, the UGILs 10 may be welded together at subsequent intervals, such as between or within the compartments. The welding may be orbital welding or other suitable welding techniques.

Embodiments may further include a geographic information systems (GIS) model for design and routing of UGIL systems, and operation of a corresponding monitoring system. For example, the GIS data model may provide for design and routing of UGILs 10 arranged in tunnels 46 and compartments 58, as described above, and having camera sliders 50 for monitoring of the UGILs. Using the GIS data model described below, the routing of the tunnels 46, UGILs 10, conductors 12 and other components of a system may be performed, and the components may be sized appropriately. As described below, the GIS data model provides for division of installation terrain into sections having a geographical area and positions (e.g., terrain height). This spatial information may be used to design and route transmission lines of a given section. Additional information used in the design and routing may include are geological conditions (e.g., soil type, demographic coverage).

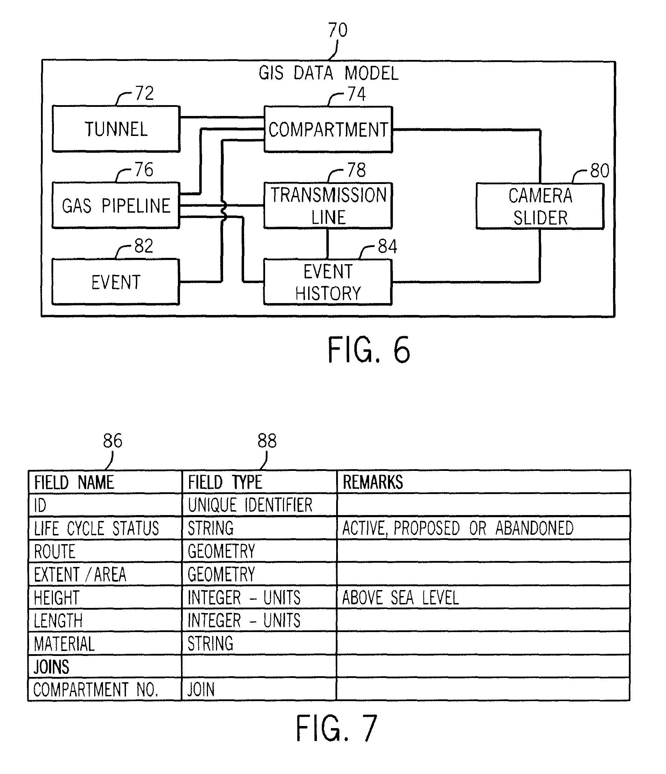

FIGS. 6-13 depict embodiments of a GIS data model 70 in further detail. The GIS data model 70 may be implemented as executable code instructions stored on a non-transitory tangible machine readable medium, such as the non-volatile memory 44 and volatile memory 42 of the computer 28. Accordingly, these executable code instructions may be executed by the one or more processors 30 of the computer 28.

Beginning with FIG. 6, this figure generally illustrates the objects used in an embodiment of a GIS data model 70. The GIS data model 70 may be stored in a database, such as on the non-volatile memory 44 of the computer 28. For example, the GIS data model 70 may include a tunnel object 72, a compartment object 74, a gas pipeline object 76, a transmission line object 78, a camera slider object 80, an event object 82, and an event history object 84. As shown in FIG. 6, each object may have one or more relationships with other objects of the GIS data model 70. As explained further below, FIGS. 7-13 depict each of these objects of the data model 70 and their corresponding properties.

Beginning with FIG. 7, this figure depicts the properties 86 of the tunnel object 72. As shown in FIG. 7, the tunnel object 72 may include the following properties: ID, life cycle status (e.g., active proposed, or abandoned), route, extent/area, height, length, material, and compartment number. The property type 88 for each property 86 is also indicated. The compartment number property provides a "join" with the compartment number of the compartment object 74, thus relating a tunnel object 72 with a compartment object 74.

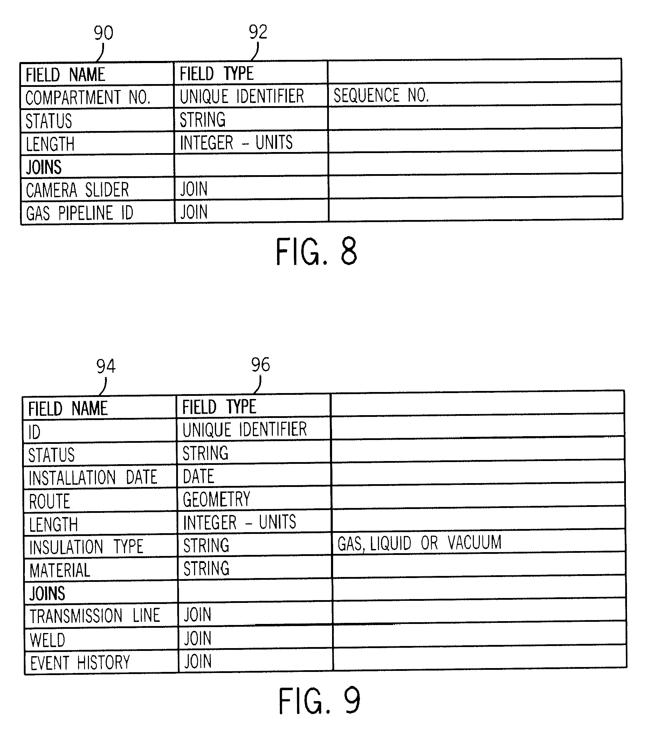

FIG. 8 depicts the properties 90 of the compartment object 74. As shown in FIG. 8, the compartment object 74 may include the following properties: compartment number, status, length, camera slider, and gas pipeline ID. The property type 92 for each property 90 is also shown in FIG. 8. As mentioned above, the compartment number provides a unique identifier for relating a compartment object 74 to a tunnel object 72. Additionally, the compartment object 74 may include a camera slider property for joining with the camera slider object 80 and a gas pipeline ID for joining with a gas pipeline object 76, thereby relating a compartment object 74 with a camera slider object 80 and gas pipeline object 76.

FIG. 9 depicts the properties 94 of the gas pipeline object 76. As shown in FIG. 9, the gas pipeline object 76 may include the following properties 94: gas pipeline ID, status, installation date, route, length, insulation type (e.g., gas, liquid, vacuum), material, transmission line, weld, and event history. The property type 96 for each property is also indicated. As noted above, the gas pipeline ID provides a unique identifier for relating a gas pipeline object 76 to a compartment object 74. Additionally, the gas pipeline object 76 may include a transmission line ID property for relation to a transmission line object 78, a weld ID property for relation to a weld object (not shown) and an event history ID for relation to an event history object 84.

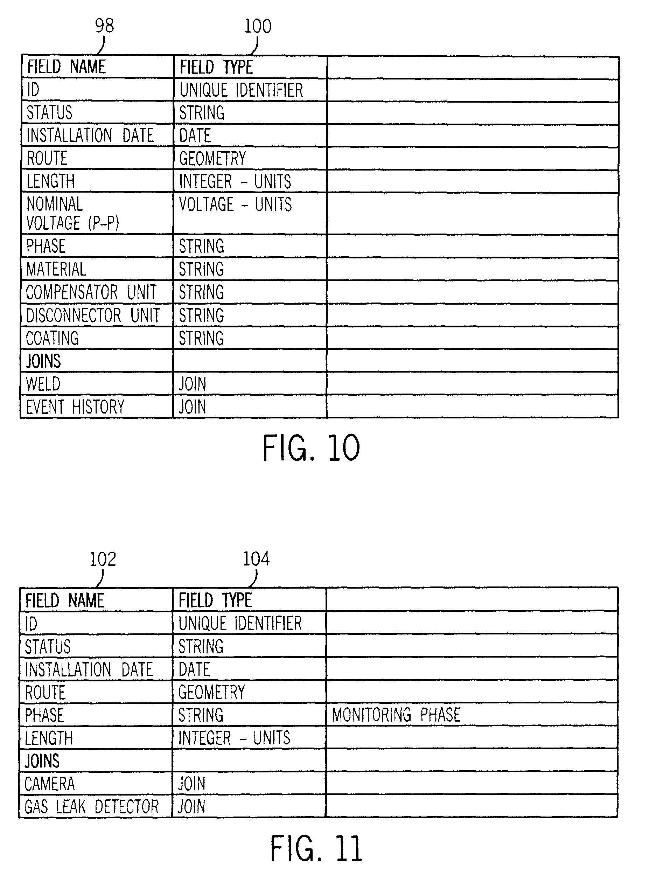

FIG. 10 depicts the properties 98 of the transmission line object 78. As depicted in FIG. 10, the transmission line object 78 may include the following properties 98: transmission line ID, status, installation date, route, length, nominal voltage (P-P), phase, material, compensator unit, disconnector unit, coating, weld ID, and event history ID. The property type 100 for each property 98 is also indicated. As explained above, the ID provides a unique transmission line identifier for relating a gas pipeline object 76 to the transmission line object 78. Further, the transmission line object 78 a weld ID property for relation to a weld object and an event history ID for relation to an event history object 84.

Next, FIG. 11 depicts the properties 102 of the camera slider object 80. As shown in FIG. 11, the camera slider object 80 may include the following properties 102: camera slider ID, status, installation data, route, phase (e.g., phase being monitored), length, camera, and gas leak detector. The property type 104 corresponding to each property 102 is also shown. As noted above, the camera slider ID of the camera slider object 80 provides a unique identifier for relating to the transmission line object 78. Additionally, the camera property and the gas leak detector property may relate the camera slider object 80 to a respective camera and gas leak detector.

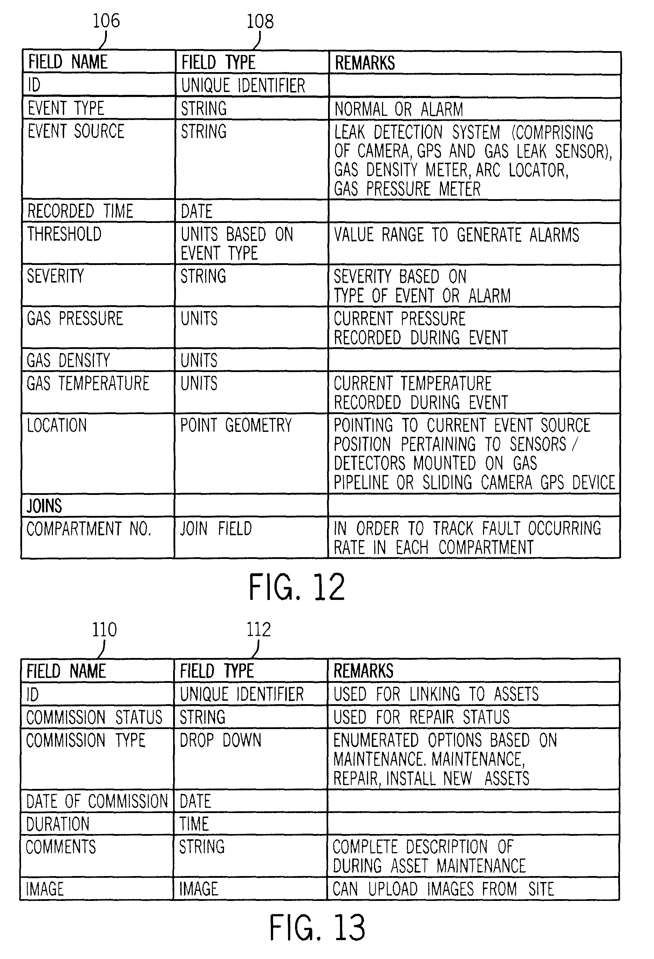

Continuing with FIG. 12, this figure depicts the properties 106 of the event object 82. The event object 82 may include the following properties 106: event ID, event type (e.g., normal or alarm), event source (e.g., leak detection system, gas density meter, arc locator, or gas pressure meter), recorded time, threshold (e.g., a value range for generating alarms), severity (e.g., severity based on a type of event or alarm), gas pressure (e.g., current pressure recorded during event), gas density, gas temperature (e.g., current temperature recorded during event), location (e.g.,. current event source position relating to sensors and detectors mounted on gas pipeline or camera GPS device), and compartment number. The property type 108 corresponding to each property is also shown. As noted above, the compartment number property relates the event object 82 to a compartment object 74, such that an event rate for a compartment may be tracked.

Finally, FIG. 13 depicts the properties 110 of the event history object 84. As shown in FIG. 13, the properties 110 of the event history object 84 may include the following: event history ID, commission status (e.g., repair status), commission type (e.g., maintenance, repair, installation of new assets, etc.), date of commission, duration, comments (e.g., description of asset maintenance, repair, installation, etc.), and image (e.g., images from the cameras). The property type 112 corresponding to each property is also shown. As mentioned above, the event history ID may relate an event history object 84 to a gas pipeline object 76 and a transmission line object 78.

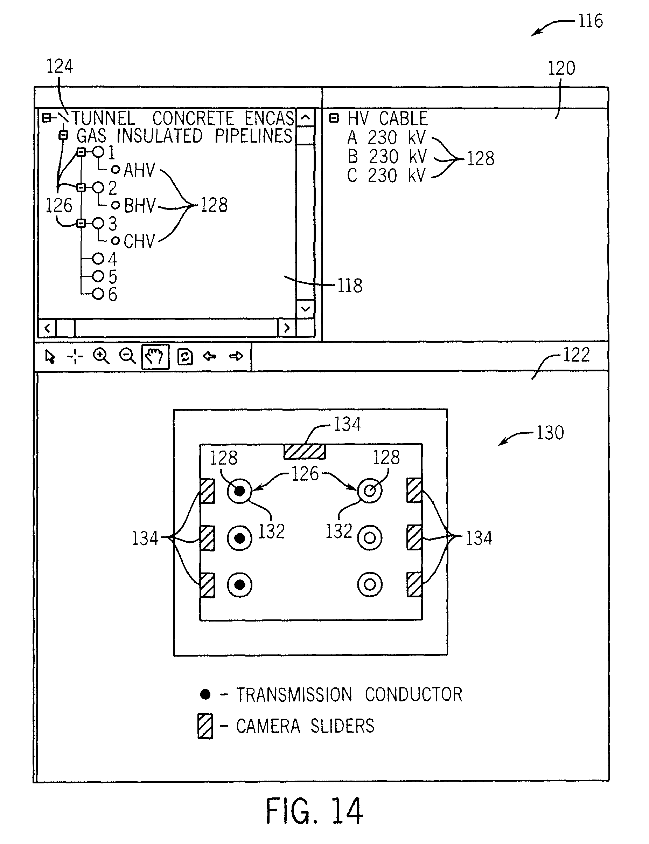

In some embodiments, a user interface application may be used to access the GIS data model 70 to provide easier viewing and configuration by a user. The user interface application may facilitate geospatial routing of tunnels 46 and UGILs 10 based on the GIS data model 70. Additionally, the user interface application may provide predefined tunnel structure templates or a user may create tunnel structure templates. With the foregoing in mind, FIG. 14 is a screenshot of a user interface application 116 in accordance with an embodiment of the present invention. The user interface application 116 may be implemented as executable code instructions stored on a non-transitory tangible computer readable medium, such as the volatile memory 42 or non-volatile memory 44 of the computer 28.

As shown in FIG. 14, the user interface application 116 may include a "Selected Route" pane 118, a "Routed Objects" pane 120, and a bottom pane 122. The Selected Route pane 118 allows selection and display of a route, having tunnels, pipelines, and cables in a hierarchical (e.g., tree) arrangement. For example, the Selected Route pane 118 may include a tunnel 124 that may be expanded to display gas insulated pipelines 126 of the tunnel 124. Each of the gas insulated pipelines 126 may then be expanded to show the transmission lines 128 for each pipeline 126. The Routed objects pane 120 may be used to select the transmissions line 128 that is to be routed through a respective gas insulated pipeline 126. The data for the tunnel 124, gas insulated pipelines 126, and transmission lines 128 may be populated from the respective objects of the GIS data model 70.

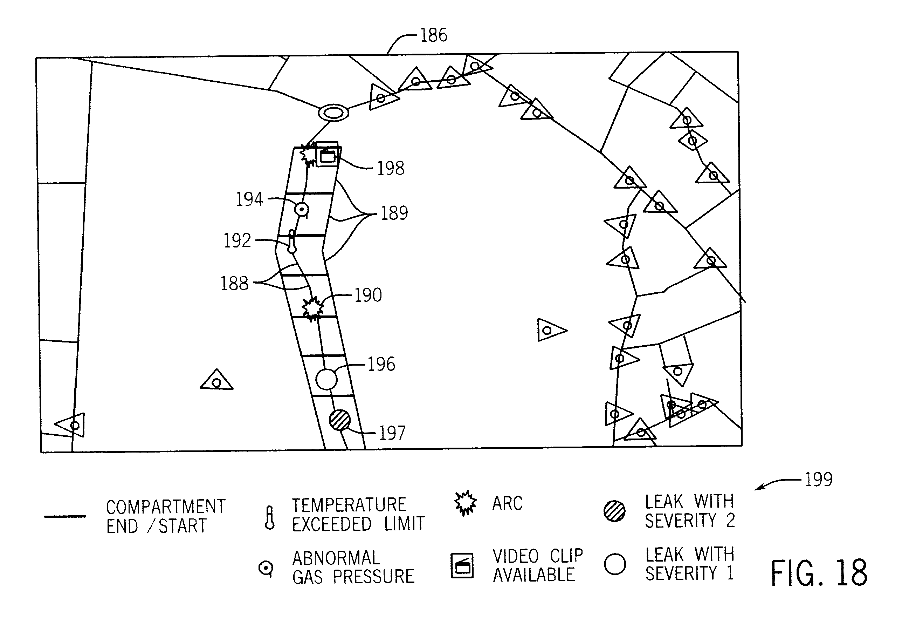

The bottom pane 122 depicts a cross-sectional view 130 of the selected tunnel 124, gas insulated pipelines 126, and transmission lines 128. The cross-sectional view 130 further depicts the enclosure 132 of the pipeline 126 and camera sliders 134 disposed in the tunnel 124. Additionally, the cross-sectional view 130 depicts the walls of the tunnel 124. Thus, using the user interface application 116, a user may view tunnels 124 and their associated gas pipelines 126 and transmission lines 128, and route transmission lines through a tunnel 124 and its associated gas pipelines 126. In other embodiments, the bottom pane 122 may depict a map view, such as shown below in FIG. 18, for a user to place a tunnel 124. The user may then view a cross-sectional view of this tunnel 124 as described above.

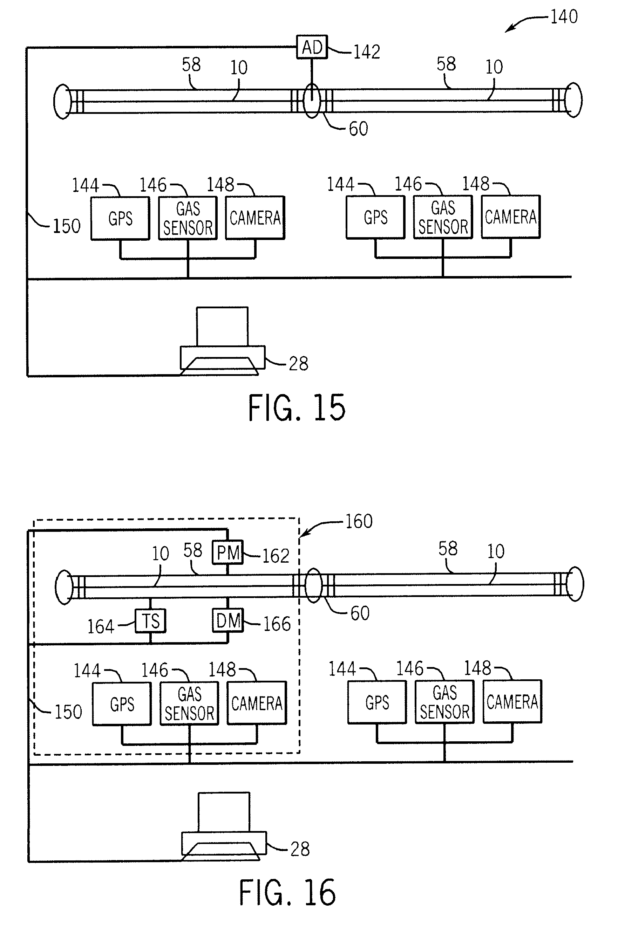

As mentioned above, embodiments of the invention may also include a monitoring system for UGILs. As described below in FIGS. 15-17, the monitoring system may include monitoring of detectors, sensors, and meters to detect an occurrence and control and monitoring of a camera to record video and still images of the event. Each compartment 58 may include the monitoring systems and associated sensors, detectors, and meters described below.

FIG. 15 depicts a schematic view of an arc locator monitoring system 140 in accordance with an embodiment of the present invention. FIG. 15 depicts implementation of the arc locator monitoring system 140 for UGILs 10. The system 140 may utilize the computer 28 described above for monitoring and other functions of the system 140. The arc locator monitoring system 140 may include an arc detector 142 disposed between compartments 58 and in the disconnector unit 60. Additionally, the system 140 may include GPS receivers 144, gas sensors 146, and cameras 148. In one embodiment, the GPS receiver 144, gas sensor 146, the camera 148, or any combination thereof, may be a single integrated unit having each component. In other embodiments, the GPS receiver 144, the gas sensor 146, and the camera 148 each may be separate unit. The cameras 148 may be installed on the camera sliders 50 and may include a movement mechanism, such as motors, belt and pulleys, etc. The arc detector 142, GPS receivers 144, gas sensors 146, and cameras 148 may be communicatively coupled to the computer 28, such as through a network 150.

The arc detector 142 may detect arc formation, such as from a breakdown in gas insulation, during maintenance, or flash over from internal faults in an electrical system. When an arc is detected, an event may be recorded as an event object 82 in the GIS data model 70 (e.g., as type "Alarm"). The events may be used by an event manager, described further below, to display alarms on a map view. When the arc is detected, the GPS receivers 144 may indicate the coordinates of the event. In response, the monitoring system 140 may slide the cameras 148 to the coordinates, enabling viewing and recording of that section of the UGIL 10 where the arc detection event occurred

In other embodiments, a gas leak detection system may be provided, alone or in addition to the arc locator monitoring system 140. FIG. 16 depicts a gas leak detection system (LDS) 160 in accordance with an embodiment of the present invention. As shown in FIG. 16, the gas leak detection system 160 may be installed for a compartment 58. Thus, multiple gas leak detection systems 160 may be installed at different compartments 58 to provide the desired leak detection. The system 160 may utilize the computer 28 described above for monitoring and other functions of the system 140.

The gas leak detection system 160 may include a pressure meter 162, a temperature sensor 164, a density meter 166, and the GPS receiver 144, gas sensor 146, and camera 148 described above. Each of these components may be communicatively coupled to the computer 28, such as through the network 150. When a gas leak occurs, the gas pressure detected by the pressure meter 162 may fall below a threshold value. As a result, such an occurrence may be recorded as an event (e.g., a gas pressure event) in the GIS data model 70. The GPS receiver 144 may indicate the coordinates of the event, and these coordinates may be recorded in the GIS data model 70. In response, the monitoring system 160 may slide the camera 148 to the coordinates, enabling viewing and recording of that section of the UGIL 10 where the pressure event occurred.

In some instances, the density and temperature of the insulating gas may change. For example, if the UGIL 10 is loaded above the permissible rated current, the temperature of the line increases and affects gas density. For example, an increase temperate may lower the gas density. The temperature sensor 164 may be correlated with predefined threshold values, and the density sensor 166 may also be correlated with predefmed threshold values.

Each sensor 164 and 166 may use multiple threshold values for monitoring. For example, the temperature sensor 164 may use two, three, four, five, or greater than five threshold values. For example, in an embodiment using two threshold values, if the temperature rises above the first threshold value but is below the second threshold value, a normal event may be created in the GIS data model. If the temperature rises above the second threshold value, an alarm event may be created in the GIS data model 70. Similarly, the density sensor 166 may use two, three, four, five, or more than give threshold values for monitoring. For example, in an embodiment using two threshold values, if the density falls below the first threshold value but is above the second threshold value, a normal event may be created in the GIS data model. If the density falls below the second threshold value, an alarm event may be created in the GIS data model 70.

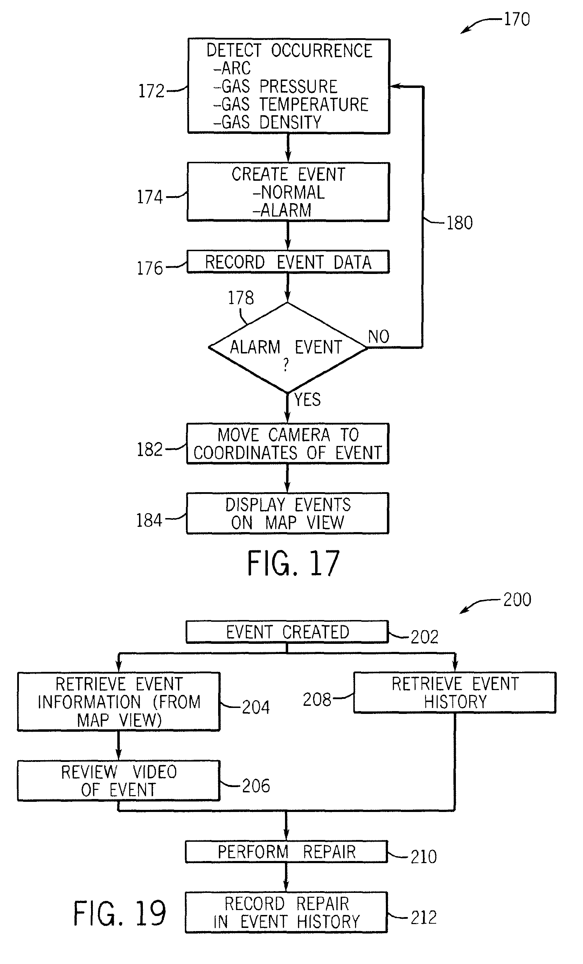

FIG. 17 depicts a process 170 for monitoring the UGILs 10 using the systems described above. The process 170 may be implemented as executable code instructions stored on a non-transitory tangible machine readable medium, such as the non-volatile memory 44 and volatile memory 42 of the computer 28. Initially, an occurrence in the tunnel, UGIL, or other portion of the system may be detected (block 172). As described above, such detections may be provided from the arc locator monitoring system 140 or the gas leak detection system 160. After detecting an occurrence, an event is created in the GIS data model 70 (block 174). As described above, depending on the detection, the event may be identified as type "normal" or type "alarm." For example, in embodiments implementing multiple thresholds, an occurrence above a first threshold but below a second threshold may be a "normal" event while an occurrence above the second threshold may be an "alarm" event.

Next, the event data may be recorded in the GIS data model 70 (block 176). Event data may include those properties described above for an event object 82 of the GIS data model 70. For example, such event data may include event source, recorded time, threshold, severity, location, gas temperature, gas pressure, and gas density. Next, the process 170 determines if the event is of an alarm type or a normal type (decision block 178). If the event is a normal type, the process 170 continues monitoring for further occurrences (line 180). If the event is an alarm type, the process 170 may move one or more cameras to the location of the occurrence (block 182), based on the coordinates recorded from the GPS receivers 44. Finally, as described further below, the alarm events may be displayed on a map view of the UGIL system (block 184).

FIG. 18 depicts a map view 186 of the user interface application 116 of a portion of a UGIL system in accordance with an embodiment of the present invention. The map view 186 may be displayed in the user interface described above. As shown in FIG. 18, the map view 186 may display the UGILs 188, compartments 189, and various events occurring along the UGILs 188. Each event may displayed by a different icon that indicates the type of the event and/or the severity of the event. For example, the map view 186 may display arc events 190, gas temperature events 192 (e.g., temperatures exceeding a threshold), gas pressure events 194 (e.g., pressures exceeding a pressure threshold), gas leaks having a first severity 196 (e.g., above a first threshold), and gas leaks having a second severity 197 (e.g., above a second threshold). Additionally, the map view 186 may display an indicator 198 for those events having recoded video. In some embodiments, a legend 199 may be displayed next to the map view 186 to defme symbols displayed in the map view 186.

In some embodiments, the GIS data model 70 described above may facilitate repairs and maintenance of a UGIL transmission system. FIG. 19 depicts a process 200 for determining repairs of a UGIL transmission system in accordance with an embodiment of the present invention. The process 200 may be implemented as executable code instructions stored on a non-transitory tangible machine readable medium, such as the non-volatile memory 44 and volatile memory 42 of the computer 28.

Initially, as described above in FIG. 17, an event may be created in the GIS data model 70 (block 202). Next, a user may retrieve information for the event (block 204), such as by clicking on an icon in the map view 186. If video is available for the event, a user may retrieve video for the event (block 206), such as by clicking on the associated video icon for the event. Additionally, a user may retrieve event history for the event (block 208) by retrieving this information from the event history object 84 of the GIS data model 70. The retrieved data for the event may include, for example, the event location, the compartment number for the event, the shortest path to the event based on the GPS coordinates, the age of the asset where the event occurred, the fault history of the asset, the most recent fault, and the last repair and the cause of the repair. Based on this information, the repair may be performed (block 210). After performing the repair, the repair may be recorded as an event history object 84 in the GIS data model 70 (block 212).

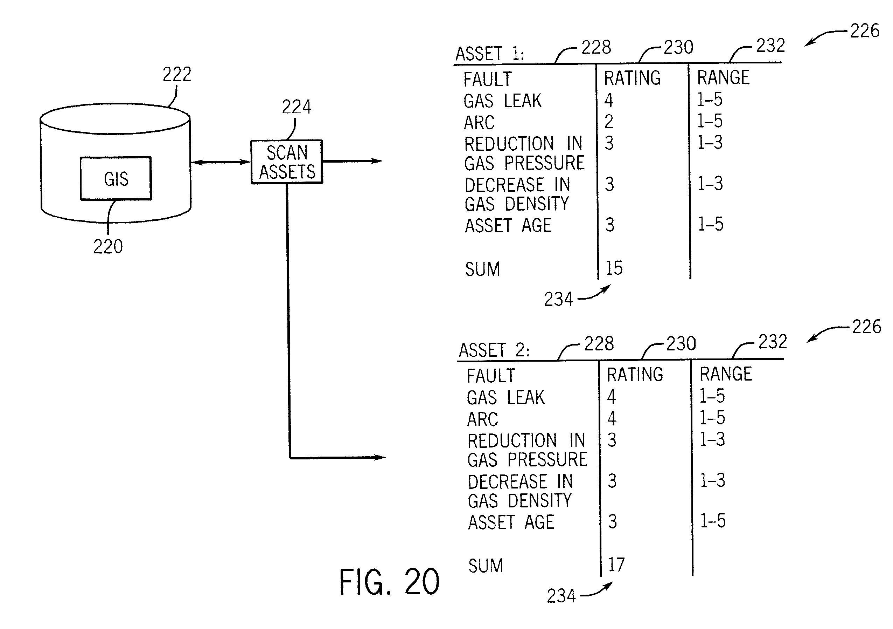

Additionally, as mentioned above, the GIS data model 70 may facilitate maintenance of a UGIL transmission system. FIG. 20 depicts a block diagram for determining maintenance for a UGIL transmission system in accordance with an embodiment of the present invention. As shown in FIG. 20, maintenance may be determined based on data from a GIS data model 220 stored in a database 222. All the assets stored in the GIS data model 220 may be scanned (block 224) to generate tabular data (tables 226) pertaining to each asset (e.g., Asset 1 and Asset 2). Each table 226 may indicate a characteristic 228 of the asset, the value 230 of the characteristic, and the range 232 used. For example, as shown in FIG. 220, such characteristics may include events for an asset, such as faults, gas leaks, arcs, reduction in gas pressure, and reduction in gas density. Additionally, the age of the asset may be provided one of the characteristics 228.

Based on this data, each table may provide a summation 234 of characteristic for an asset. This summation 234 may enable prioritization of assets (block 236) based on the data. For example, the higher the summation 234 the more likely a given asset requires maintenance over another asset having a lower summation. Additionally, reports may be generated (block 238) that provide detailed information of the prioritized assets as retrieved from the GIS data model 220, such as compartment number, maintenance history, etc.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (140), comprising:
a first compartment (58) comprising a gas insulated transmission line (10);
a first camera slider (50) disposed on a wall (52) of the first compartment (58);
a camera (148) moveably coupled to the camera slider (50);
a global positioning system (GPS) receiver (144) disposed in the first compartment (58); and
a gas sensor (146) disposed in the first compartment (58).

2. The system of claim 1, wherein the gas sensor (146), the camera (148), and the GPS receiver (144) are coupled to a network (150).

3. The system of claim 1 or 2, comprising a second compartment (58) comprising a second gas insulated transmission line (10).

4. The system of claim 3, comprising a disconnector (60) disposed between the first compartment (58) and the second compartment (58).

5. The system of claim 4, comprising an arc detector (142) coupled to the disconnector (60).

6. The system of claim 5, wherein the arc detector (142) is coupled to the network (150).

7. The system of any of claims 2 to 6, comprising a pressure meter (162) disposed in the first compartment (58) and coupled to the network (150).

8. The system of any of claims 2 to 7, comprising a temperature sensor (164) disposed in the first compartment (58) and coupled to the network (150).

9. The system of any of claims 2 to 8, comprising a gas density meter (166) disposed in the first compartment (58) and coupled to the network (150).

10. The system of any of claims 2 to 9, comprising a computer (28) coupled to the network (150) and configured to receive data from the pressure meter (162), the temperature sensor (164), the gas density meter (166), the GPS receiver (144), the gas sensor (146) and the camera (148).

11. A method (170), comprising:
receiving, at a computer (28), data from an arc detector (142), a gas sensor (146), a pressure meter (162), a temperature sensor (164), a gas density meter (166), or a combination thereof, disposed in a compartment comprising a underground gas insulated transmission line (10) wherein the computer (28) is coupled to the arc detector (142), the gas sensor (146), the pressure meter (162), the temperature sensor (164), the gas density meter (166), or a combination thereof, via a network (150);
receiving location coordinates from a GPS receiver (144) coupled to the network (150);
storing the data in a data model (70) stored in a database (222) accessible by the computer (28);
storing the location coordinates in the database (222);
associating the location coordinates with the data; and
moving a camera (148) disposed in the compartment (58) to the location coordinates.

12. The method of claim 11, wherein the database (222) is stored on the computer (28).

13. The method of claim 11 or 12, wherein moving the camera (148) comprises moving the camera (148) along a camera slider (50) disposed in the compartment (58).

14. The method of claim 11, 12 or 13 comprising recording video from the camera (148) and storing the video in the database (222).

15. The method of any of claims 11 to 14, comprising identifying the data as an alarm.

16. The method of claim 15, comprising displaying the alarm on a map (186) displayed on the computer (28).

17. A computer program comprising computer program code means arranged to perform the steps of the method of any of claims 11 to 16 when executed by the computer.

18. The computer program of claim 17, embodied on a computer readable medium.
